# EUROPÄISCHE PATENTSCHRIFT

(11) **EP 1 233 046 B1**
(45) Veröffentlichungstag und Bekanntmachung des Hinweises auf die Patenterteilung: **08.03.2006**
(21) Anmeldenummer: 02001375.1
(22) Anmeldetag: 19.01.2002
(51) Int. Cl.: C09J 7/02, C09J 7/04

(54) **Trägermaterialbahn, auf der beidseitig selbstklebend ausgerüstete Klebebandabschnitte angeordnet sind, sowie die Verwendung dieser in einem Handetikettiergerät**
Release liner having double-sited self-adhesive sections and use thereof in a hand-held labeler
Revêtement détachable comportant un ruban adhésif double face, et son utilisation dans une étiqueteuse à main

(30) Priorität: 16.02.2001 DE 10107294
(43) Veröffentlichungstag der Anmeldung: 21.08.2002
(73) Patentinhaber: tesa AG, 20253 Hamburg (DE)
(72) Erfinder: Wieck, Andreas, 25469 Halstenbek (DE); Schwertfeger, Michael, 22147 Hamburg (DE)

(56) Entgegenhaltungen:
- EP-A- 0 874 034
- WO-A-01/90269
- FR-A- 2 507 196

## Beschreibung

Die Erfindung betrifft eine Trägermaterialbahn, auf der beidseitig selbstklebend ausgerüstete Klebebandabschnitte angeordnet sind, sowie die Verwendung dieser in einem Handetikettiergerät. Klebebänder enthaltende Trägermaterialbahnen werden in der nicht vorveröffentlichten Anmeldung WO-A-0190269 sowie in EP-A-0874034 beschrieben.

Teile, welche durch ein doppelseitiges Klebeband befestigt werden sollen (zum Beispiel Flachbandkabel, Displays, Kartonagen) werden sehr oft vorab komplett selbstklebend ausgerüstet. Dies ist mit sehr viel Materialverbrauch verbunden, und sowohl die kantengleiche Ausrüstung von Teilen mit einem Klebeband, als auch das notwendige Abziehen der Klebebandabdeckung später bei der Montage sind sehr zeitintensiv.

Eine Alternative besteht im Aufbringen von einzelnen Klebepunkten direkt bei der Montage, um dann anschließend das Teil darauf zu verkleben. Auch diese Arbeit ist umständlich, da die Klebepunkte wiederum mit einer Abdeckung ausgerüstet sind, welche vorab entfernt werden muß.

Aufgabe der Erfindung ist es, eine Trägermaterialbahn mit beidseitig klebend ausgerüsteten Klebebandabschnitten zur Verfügung zu stellen, so daß diese auf einem Handetikettiergerät, wie es beispielsweise bei der Aufbringung von Preisetiketten verwendet wird, verarbeitet werden kann, um somit einzelne Klebebandabschnitte direkt sehr schnell auf einem beliebigen Untergrund aufbringen zu können und anschließend ein beliebiges Teil direkt auf diesen zu verkleben.

Gelöst wird diese Aufgabe durch eine Trägermaterialbahn, wie sie im Hauptanspruch niedergelegt ist. Die Unteransprüche betreffen vorteilhafte Fortbildungen des Erfindungsgegenstands sowie besonders vorteilhafte Verwendungen desselben.

Demgemäß betrifft die Erfindung eine Trägermaterialbahn, auf der beidseitig selbstklebend ausgerüstete Klebebandabschnitte angeordnet sind, wobei auf die Trägermaterialbahn beidseitig eine antiadhäsive Beschichtung aufgebracht ist und wobei sich die beiden antiadhäsiven Beschichtungen im Abweisungsgrad zur Klebemasse der Klebebandabschnitte unterscheiden.

Hier bei weist die antiadhäsive Beschichtung, die sich auf der oberen Seite der Trägermaterialbahn befindet, einen niedrigeren Abweisungsgrad auf als die antiadhäsive Beschichtung, die sich auf der unteren Seite der Trägermaterial befindet.
Auf diese Weise ist nämlich gewährleistet, daß
- die einzelnen Klebebandabschnitte auf der Trägermaterialbahn in Form einer Rolle ohne weitere Hilfsmittel (zum Beispiel einer zweiten Abdeckung) konfektioniert und dargereicht werden können; beim Konfektioniervorgang (Zuschnitt der Klebebandabschnitte) kann das überflüssige Material als Gittemetz abgezogen und verworfen werden und
- die Klebebandabschnitte durch Hilfsmittel (zum Beispiel Etikettiergerät) einfach gespendet werden können.

Als Trägermaterialbahn werden vorzugsweise Papier, ein Papier-Polyolefin-Verbund und/oder eine Folie eingesetzt.

Als antiadhäsive Beschichtung wird lösemittelfrei beschichtetes Silikon eingesetzt.

Vorzugsweise wird das lösemittelfrei beschichtete Silikon mit 0,8 bis 3,7 g/m², bevorzugt 1,3 bis 3,2 g/m², ganz besonders bevorzugt 1,8 bis 2,8 g/m², aufgetragen.

Als Träger für die Klebebandabschnitte werden weiterhin vorzugsweise bahnförmige Materialien wie Papier, Vliese, Kunststoffolien und Schaumstoffe eingesetzt.
Prinzipiell sind alle Arten von doppelseitig beschichteten Klebebändern als Basismaterial für die Klebebandabschnitte geeignet.
Als Klebemassen für die Klebebänder können alle Haftklebemassen, wie sie zum Beispiel im SATAS, Handbook of Pressure Sensitive Adhesive Technology, Third Edition, erwähnt sind, eingesetzt werden. Insbesondere eignen sich Natur-/Synthesekautschuk- und acrylatbasierende Klebemassen, die aus der Schmelze oder Lösung aufgetragen werden können.

In einer ersten vorteilhaften Verwendung der Trägermaterialbahn wird diese in einem Handetikettiergerät eingelegt, aus dem einzelne Klebebandabschnitte gespendet werden können.

Besonders vorteilhaft läßt sich die Trägermaterialbahn zur Verklebung von einzelnen Teilen im Kraftfahrzeugbau verwenden, und zwar in Verbindung mit dem Handetikettiergerät, aber z.B. auch beim Messebau oder im Bereich Verpackungen.

Die erfindungsgemäße Trägermaterialbahn bietet eine Vielzahl von Vorteilen, die derartig nicht vorherzusehen gewesen sind.
Es entsteht beim Verspenden der Klebebandabschnitte kein Zeitverlust durch Abziehen einer Abdeckung und weniger Müll. Verschiedene Größen von Klebepunkten - in unterschiedlicher Anzahl verklebt - lassen quasi eine "Dosierung" der benötigten Menge Klebeband zu.

Im folgenden wird anhand einer Figur eine bevorzugte Ausführungsform der Trägermaterialbahn dargestellt, ohne in irgendeiner Form einschränkend wirken zu sollen.

Die Trägermaterialbahn 1 ist bevorzugt zu einer Rolle aufgewickelt. Auf der Trägermaterialbahn 1 sind die einzelnen Klebebandabschnitte 2 in regelmäßigen Abständen 2 angeordnet.
Die Trägermaterialbahn 1 weist unterschiedliche antiadhäsive Beschichtungen 3,4 auf. Die sich auf der unteren Seite der Trägermaterialbahn 1 befindende antiadhäsive Beschichtung 3 weist einen höheren Abweisungsgrad auf als die antiadhäsive Beschichtung 4, die sich auf der oberen Seite der Trägermaterialbahn 1 befindet.

Die Rolle der Trägermaterialbahn 1 kann derartig in ein Handetikettiergerät eingelegt werden, aus dem das Verspenden der Klebebandabschnitte 2 erfolgen kann.

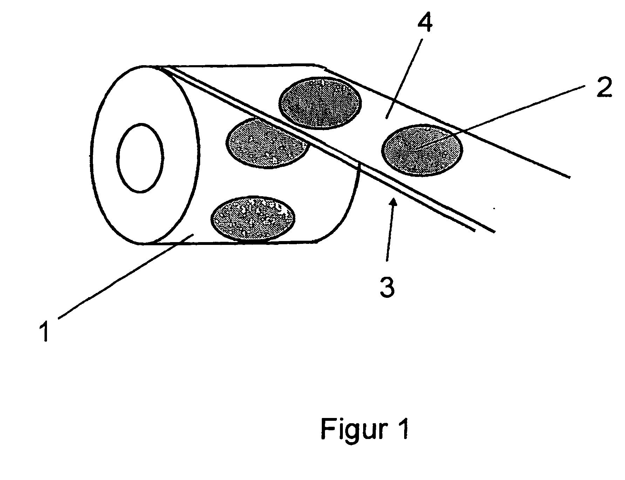

## Patentansprüche

1. Trägermaterialbahn, auf der beidseitig selbstklebend ausgerüstete Klebebandabschnitte angeordnet sind, wobei
auf die Trägermaterialbahn beidseitig eine antiadhäsive Beschichtung aufgebracht ist, als antiadhäsive Beschichtung lösemittelfrei beschichtetes Silikon eingesetzt wird, sich die beiden antiadhäsiven Beschichtungen im Abweisungsgrad zur Klebemasse der Klebebandabschnitte unterscheiden und
die antiadhäsive Beschichtung, die sich auf der unteren Seite der Trägermaterialbahn befindet, einen höheren Abweisungsgrad aufweist als die antiadhäsive Beschichtung, die sich auf der oberen Seite der Trägermaterial befindet.

2. Trägermaterialbahn nach Anspruch 1, **dadurch gekennzeichnet, dass** als Trägermaterialbahn Papier, ein Papier-Polyolefin-Verbund und/oder eine Folie eingesetzt werden.

3. Trägermaterialbahn nach den Ansprüchen 1 und 2, **dadurch gekennzeichnet, dass** als Träger für die Klebebandabschnitte bahnförmige Materialien wie Papier, Vliese Kunststofffolien oder Schaumstoffe eingesetzt werden.

4. Trägermaterialbahn nach den Ansprüchen 1 bis 3, **dadurch gekennzeichnet, dass** die antiadhäsive Beschichtung mit 0,8 bis 3,7 g/m², bevorzugt 1,3 bis 3,2 g/m², ganz besonders bevorzugt 1,8 bis 2,8 g/m², aufgetragen wird.

5. Verwendung der Trägermaterialbahn nach zumindest einem der vorhergehenden Ansprüche, **dadurch gekennzeichnet, dass** die Trägermaterialbahn in einem Handetikettiergerät eingelegt wird, aus dem einzelne Klebebandabschnitte gespendet werden können.

6. Verwendung der Trägermaterialbahn nach zumindest einem der vorhergehenden Ansprüche zur Verklebung von einzelnen Teilen im Kraftfahrzeugbau.

## Claims

1. Carrier material web on which double-sidedly self-adhesive tape sections are disposed, where
an anti-adhesive coating has been applied to either side of the carrier material web, solventlessly coated silicone is used as anti-adhesive coating, the two anti-adhesive coatings differ in their degree of repellency with respect to the adhesive of the adhesive tape sections, and the anti-adhesive coating located on the bottom side of the carrier material web has a higher degree of repellency than the anti-adhesive coating located on the top side of the carrier material.

2. Carrier material web according to Claim 1, **characterized in that** paper, a paper/polyolefin composite and/or a film are used as carrier material web.

3. Carrier material web according to Claims 1 and 2, **characterized in that** web-format materials such as paper, nonwovens, polymeric films, and foams are used as carriers for the adhesive tape sections.

4. Carrier material web according to Claims 1 to 3, **characterized in that** the anti-adhesive coating is applied at 0.8 to 3.7 g/m², preferably 1.3 to 3.2 g/m², more preferably 1.8 to 2.8 g/m².

5. Use of the carrier material web according to at least one of the preceding claims, **characterized in that** the carrier material web is inserted in a hand-held labeller from which individual adhesive tape sections can be dispensed.

6. Use of the carrier material web according to at least one of the preceding claims for bonding individual parts in automotive construction.

## Revendications

1. Bande de support sur laquelle sont disposées des portions de ruban adhésif double face, dans laquelle :
on applique des deux côtés de la bande de support un revêtement antiadhésif,
on utilise comme revêtement antiadhésif de la silicone revêtue sans solvant,
les deux revêtements antiadhésifs se différenciant par leur degré antiadhésif vis-à-vis de la composition adhésive des portions de ruban adhésif et
le revêtement antiadhésif qui se trouve sur le côté inférieur de la bande de support présente un degré antiadhésif plus élevé que le revêtement antiadhésif qui se trouve sur le côté supérieur du matériau de support.

2. Bande de support selon la revendication 1, **caractérisée en ce que** l'on utilise comme bande de support du papier, un composite papier-polyoléfine et/ou un film.

3. Bande de support selon les revendications 1 et 2, **caractérisée en ce que** l'on utilise comme support pour les portions de ruban adhésif des matériaux en forme de bande comme du papier, des non-tissés, des films plastiques ou des mousses.

4. Bande de support selon les revendications 1 à 3, **caractérisée en ce que** le revêtement antiadhésif est appliqué à raison de 0,8 à 3,7 g/m², de préférence à raison de 1,3 à 3,2 g/m², et particulièrement de préférence à raison de 1,8 à 2,8 g/m².

5. Utilisation de la bande de support selon au moins l'une quelconque des revendications précédentes, **caractérisée en ce que** la bande de support est introduite dans une étiqueteuse à main qui permet de distribuer des portions de ruban adhésif individuelles.

6. Utilisation de la bande de support selon au moins l'une quelconque des revendications précédentes pour coller des articles individuels dans la construction automobile.
